Europäisches Patentamt

European Patent Office

Office européen des brevets

(11) Veröffentlichungsnummer: **0 357 806**
**A1**

## EUROPÄISCHE PATENTANMELDUNG

(21) Anmeldenummer: 88113405.0

(22) Anmeldetag: 18.08.88

(51) Int. Cl.5: **B22D 11/126 , B23K 7/00**

(43) Veröffentlichungstag der Anmeldung:
**14.03.90 Patentblatt 90/11**

(84) Benannte Vertragsstaaten:
**AT BE DE ES FR GB IT SE**

(71) Anmelder: **INREVERS VERWALTUNGS G.M.B.H.**
**Gräsiger Weg 7a**
**D-6238 Hofheim-Wallau(DE)**

(72) Erfinder: **Lotz, Horst K.**
**Fasanenweg 7**
**D-6240 Königstein(DE)**

(54) **Bedarfsweise veränderliche Brennschneidanlage für Stahlstranggussanlagen.**

(57) Bei einer bedarfsweise veränderlichen Brennschneidanlage für Stahlstranggußanlagen ist es durch die abwechselnde Anordnung von lagefesten (4) und absenkbaren (5) Rollgangsrollen und bei entsprechender Steuerung der Brennschneidmaschine (2) möglich, einen auf den Strangquerschnitt bezogenen Schneid-Aussetzbetrieb oder einen kombinierten Schneid-Aussetzbetrieb und Rollgangsrollen-Absenkbetrieb durchzuführen.

EP 0 357 806 A1

## Bedarfsweise veränderliche Brennschneidanlage für Stahlstranggußanlagen

Es sind Brennschneidanlagen bekannt, bei denen die mit sogenannter Gießgeschwindigkeit den Schneidbereich durchlaufenden Stahlstränge in diesem Bereich durch lagefeste Rollgangsrollen (4) z.B. Scheibenrollen, oder durch absenkbare oder verschiebbare Rollgangsrollen auf Wagen unterstützt werden. Während bei den lagefesten Rollgangsrollen (4) trotz Besprühung mit Wasser eine Beschädigung und Verschmutzung durch den Schneidstrahl und die Schneidschlacke ein häufiges Auswechseln dieser Rollen erfordert, wird die Lebensdauer oder der Wartungsbedarf von verschiebbaren Rollgangsrollen, die schnell unter dem sich nähernden Schneidbrenner (6) durchgezogen werden, schon wesentlich besser, wenngleich die Beschaffungskosten hoch sind. In beiden Fällen kommt es auch zu Beeinträchtigungen der Brennschnittqualität durch den Rückstau des Brennstrahls über den Rollgangsrollen.

Geschützter und den Brennschnitt weniger beeinflussend sind absenkbare Rollgangsrollen (5), die jeweils vor dem herannahenden Schneidbrenner (6) abgesenkt und nach dem Überfahren wieder angehoben werden. Hierfür sind die Beschaffungs-, Wartungs- und Reparaturkosten am ungünstigsten bzw. Betriebsstörungen am häufigsten.
Daher wurde vor geraumer Zeit ein vorteilhafter Vorschlag siehe Europ.Patentanmeldung 83107049.5, gemacht, nämlich mit nur lagefesten Rollen (4) zu arbeiten und den Schneidvorschub, den Schneidsauerstoff und die Brennerflamme während des Synchronlaufes von Brennschneidmaschine (2) und Strang (1) im Bereich und über diesen Rollgangsrollen (4) auszusetzen und das Schneiden danach wieder aufzunehmen. Das führte zu unerwünschter Verlängerung des gesamten Schneidbereiches 3, die man durch Vergrößerung der Abstände (7) zwischen den Rollgangsrollen (4) wieder verbessern konnte.

Das wiederum beschränkte aber die Anwendung des Schneidaussetzbetriebes, auch intermittierendes Schneiden oder Pausenschneiden genannt, nur für Anlagen mit ausreichend biegesteifen strangquerschnitten, oder solche, bei denen im Schneidbereich (3) keine kurzen Strangstücke besonders bei Gießende als Reststücke anfallen oder bei denen die Rollgangsrollen nicht auch zum Ein- und Ausfahren der gelenkigen Kaltstrangkette und daher auch mit geringem Rollgangsrollenabstand (7) gebraucht werden.

Die nachstehend beschriebene Erfindung beansprucht auf einfache Weise, die den Umständen nach günstigste Betriebsform bei günstigstem Aufwand zu ermöglichen:
In einem Schneidbereich (3) mit normalen Rollgangsrollenabständen (7) ist kostensparend nur jede zweite Rollgangsrolle absenkbar (5) ausgeführt, die anderen Rollgangsrollen sind lagefest (4) ausgebildet.

Die Brennschneidmaschine (2) hat zur jeweiligen Bestimmung ihrer Lage einen Stellungsgeber (9), insbesondere zur Erkennung der Lage des oder der Schneidbrenner (6) gerade vor, über und gerade hinter einer absenkbaren Rollgangsrolle (5). Diese Situationen werden vom STellungsgeber (9), der beispielsweise auch mit Schaltnocken (10) vor und hinter den Rollgangsrollen (4, 5) überragend dargestellt werden kann, an die Steuerung der Brennschneidmaschine (2) gemeldet. Diese ist mit Vorwahlmöglichkeit, z.B. Wahlschalter für reinen Aussetzbetrieb, kombiniertem Aussetz- und Absenkbetrieb und für Transportbetrieb ausgestattet.
Zum Einfahren oder Ausfahren der Kaltstrangkette oder von kurzen Strangstücken, z.B. Reststücken ohne Schneidbetrieb wird auf Transportbetrieb geschaltet. Die absenkbaren Rollen werden angehoben (5) und der Schneidbetrieb wird durch elektrische Verriegelung unbrauchbar gemacht. Nun hat der Rollgang (11) des Schneidbereiches (3) seine geringsten Abstände zwischen den Rollgangsrollen (7), z.B. 1,2 m oder 1,5 m.
Für den Aussetzbetrieb wird vom Transportbetrieb auf Aussetzbetrieb geschaltet und die absenkbaren Rollen (5) senken alle vorzugsweise unter eine Wassersprüheinrichtung ab. Jetzt betrüge der Abstand der Rollgangsrollen (4) zum Beispiel 2,4 m oder 3,0 m. Beim nachfolgenden Schneidbetrieb im Synchronlauf meldet der Stellungsgeber (9) die Annäherung einer nicht lagefesten Rollgangsrolle (4) worauf die Steuerung der Brennschneidmaschine (2) den eigentlichen Schneidbetrieb der Brenner (6) mit Vorschub, Sauerstoffstrom und Heizflamme einstellt, diesen aber hinter der lagefesten Rollgangsrolle bei Signal vom Stellungsgeber (9) wieder aufnimmt. Die Signale vom Stellungsgeber (9) vor und nach abgesenkten Rollgangsrollen (5) bleiben unberücksichtigt und der Schneidbetrieb wird über diesen normal fortgesetzt.
Beim kombinierten Aussetz- und Absenkbetrieb sind alle Rollgangsrollen oben lagefest oder angehoben (absenkbar). Die Rollgangsrollenabstände (7) liegen z.B. wieder bei 1,2 m bzw. 1,5 m. Auf Stellungsgebersignal hin wird der Schneidbetrieb über den lagefesten Rollen (4) wieder wie beim Aussetzbetrieb unterbrochen. Die absenkbaren Rollgangsrollen (5) werden bei fortgesetztem Schneidbetrieb vor dem sich nähernden Schneidbrenner (6) abgesenkt und wieder angehoben, wenn die Beschädigungs- und Verschmutzungsgefahr, wieder vom Stellungsgeber (9) angezeigt, vorbei ist.

Die kombinierte Ausstattung und Arbeitsweise mit 2 Schneid-und einem Transportsystem erlaubt einen einfach festzulegenden und alle Bedarfsfälle umfassenden Betrieb eines wirtschaftlich erstellbaren Schneidbereiches 3 in einer STahlstranggußanlage. Es ist ohne weiteres auch möglich, eine automatische Ein- bzw. Umschaltung der verschiedenen Betriebsweisen, z.B. durch den letzten Brennschnitt laut Schneidprogramm aus einer Optimierung oder bei einer Vorgabe der Brennschneidgeschwindigkeit, z.B. Schneiddicke, Schneidbreite und Temperatur des Stahlstrangs (1) oder bei Erhöhung der Gießgeschwindigkeit auf Aus- bzw. Einfahrgeschwindigkeit vorzunehmen.

Legende

1 Stahlstrang
2 Brennschneidmaschine
3 Schneidbereich
4 lagefeste Rollgangsrolle
5 absenkbare Rollgangsrolle
6 Schneidbrenner
7 Abstand Rollgangsrollen
8 Auslaufrollgang
9 Stellungsgeber
10 Schaltnocken

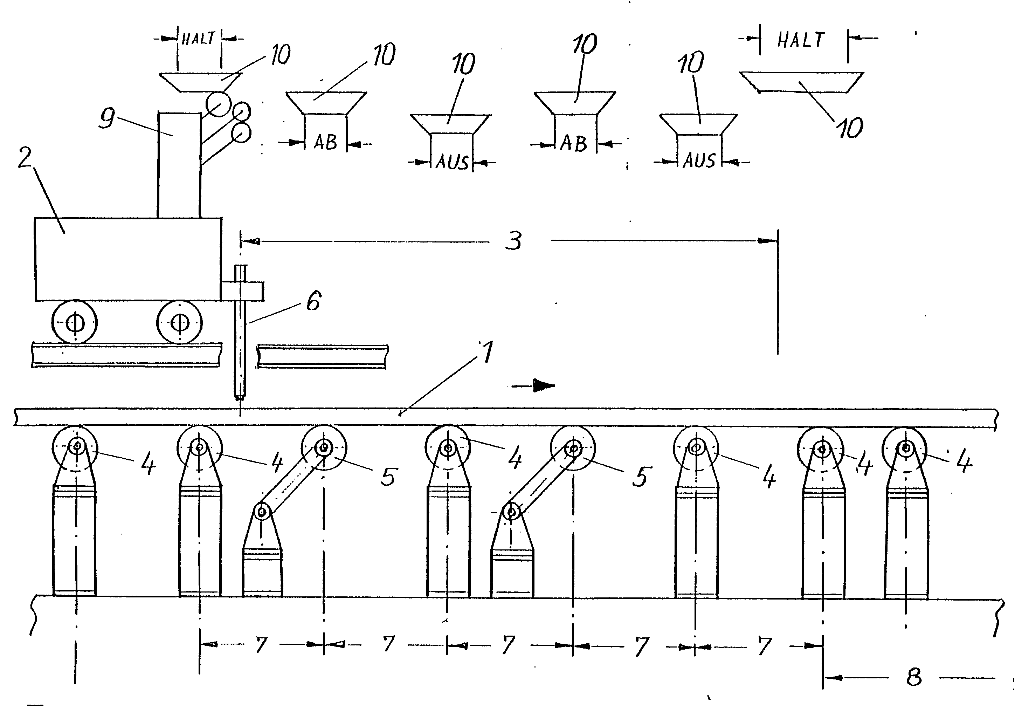

**Ansprüche**

1. Bedarfsweise veränderliche Brennschneidanlage für Stahlstranggußanlagen, dadurch gekennzeichnet, daß die Brennschneidmaschine (2) durch Abschalten von Schneidvorschub und schneidsauerstoff bzw. auch Heizflamme zum Aussetzen des Brennschneidens bei fortgesetztem Synchronlauf über den Strang (1) im Schneidbereich (3) unterstützenden lagefesten Rollgangsrollen (4) ausgerüstet aber jede zweite Rollgangsrolle (5) doch absenkbar ausgeführt ist.

2. Bedarfsweise veränderliche Brennschneidanlage für Stahlstranggußanlagen, dadurch gekennzeichnet, daß die Brennschneidmaschine (2) mit Stellungsgeber (9) und Schaltnocken (1o) und einer Steuerung ausgerüstet ist, mit der ein reiner Aussetzbetrieb über den lagefesten Rollgangsrollen (4) oder ein kombinierter Aussetz- und Absenkbetrieb für leichter durchbiegende Stränge (1) oder ein AbsenkTransportbetrieb mit nur für den Transport kurzer Strangstücke bzw. -reste oder zum Ein- und Ausfahren von gelenkigen Kaltstrangketten angehobenen absenkbaren Rollen (5) möglich ist.

**Europäisches Patentamt**

# EUROPÄISCHER RECHERCHENBERICHT

Nummer der Anmeldung

EP 88 11 3405

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 309 304 (GEGA GES. F. GASTECHNIK) * Ansprüche 1,2 * --- | 1 | B 22 D 11/126 B 23 K 7/00 |
| A | EP-A-0 004 384 (I.P.U. LTD) * Anspruch 3 * --- | 1 | |
| A | EP-A-0 554 013 (VOEST-ALPINE) * Ansprüche 1,2 * --- | 1 | |
| D,A | EP-A-0 120 114 (AUTE GES. F. AUT. TECHNIK) * Ansprüche 1,4 * ----- | 1 | |

RECHERCHIERTE SACHGEBIETE (Int. Cl.5)

B 22 D 11/00
B 23 K 7/00

**Der vorliegende Recherchenbericht wurde für alle Patentansprüche erstellt**

| Recherchenort | Abschlußdatum der Recherche | Prüfer |
|---|---|---|
| BERLIN | 17-04-1989 | GOLDSCHMIDT G |

EPO FORM 1503 03.82 (P0403)